# EUROPEAN PATENT SPECIFICATION

(11) **EP 3 994 445 B1**
(45) Date of publication and mention of the grant of the patent: **21.08.2024**
(21) Application number: 20733845.0
(22) Date of filing: 25.06.2020
(51) Int. Cl.: G01N 17/00, G01N 17/04

(54) **DYNAMIC TEST LOOP FOR DETERMINING MOLTEN SALT CORROSION**
DYNAMISCHE PRÜFSCHLEIFE ZUR BESTIMMUNG DER SALZSCHMELZENKORROSION
BOUCLE D'ESSAI DYNAMIQUE POUR DÉTERMINER LA CORROSION DE SEL FONDU

(30) Priority: 03.07.2019 EP 19184129
(43) Date of publication of application: 11.05.2022
(73) Proprietor: JOHN COCKERILL RENEWABLES S.A., 4100 Seraing (BE)
(72) Inventor: BUCCI, Julie, 4020 Liège (BE); SMOLDERS, Manuel, 4537 Verlaine (BE); HARZALLAH, Ridha, 4000 Liège (BE); WINAND, Stéphane, Angleur 4031 (BE)
(74) Representative: AWA Benelux
(86) International application number: PCT/EP2020/067786
(87) International publication number: WO 2021/001249

(56) References cited:
- EP-A1- 3 032 240
- WO-A1-2008/115050
- DE-A1- 102012 221 673

## Description

### Field of the Invention

The present invention relates to an installation for carrying out degradation and corrosion tests on samples exposed to a fluid such as a melted medium in a circulation loop line, and in particular dynamic corrosion tests on samples exposed to molten salt in the loop.

The present invention also relates to the method for achieving corrosion tests in the installation.

The present invention is applicable in technical fields where corrosion of molten salt corrosion or any other fluid at a given temperature has to be monitored within an installation, and in the particular in the field of concentrated solar power (CSP) technology.

### Prior Art

In the molten salt solar tower power plants, and in other fields where molten salt is used, there is a need to know the degradation of the equipment which is in contact with the hot salt.

As molten salt behaviour in these technologies is still at an early stage of knowledge, most of the market actors currently base their design on literature-available data. The Applicant has already gone deeper into salt expertise by performing static corrosion tests. In these static tests, the temperature of the metal used in the solar receivers is equal to the salt temperature and there is no salt circulation and further no dynamic effect (erosion and dilution).

Improving and completing corrosion understanding however will require performing dynamic corrosion tests, especially with use of alloys typically of interest in solar receiver tubes (nickel-based superalloys 230, Inconel 625, etc.).

To this end, static and dynamic corrosion tests have been developed, in which samples made of different materials such as steel, carbon, stainless steel, etc. are put into contact with salt, and in conditions as close as possible of normal operation conditions. Many studies are aiming at understanding the actual corrosion mechanism and to classify the different alloys for their suitability to be used in molten salt heat exchangers and in thermal storage applications.

Document EP 3 239 690 discloses an installation for carrying out degradation tests on specimens exposed to materials in a melted state (such as metals, alloys, salts or glass, etc.). The method disclosed therein ensures continuous stable test conditions throughout the duration of the test. The dynamic test is limited to a closed circuit established between a storage tank and a testing chamber. In order to control the degradation process developed during the test, the samples are introduced beforehand into the testing chamber. This system ensures continuous circulation of the melted medium from the testing chamber to the tank and vice versa. In the tank, the optimal temperature of the test is maintained by a temperature control system, acting on a system of electrical resistors arranged in the walls of the tank. The assembly of conduits through which the melted fluid circulates is duly heated and thermally insulated in order to minimize the loss of temperature in the fluid, in addition to preventing any phase change that could lead to mechanical problems in auxiliary systems.

In the document *"*A forced-circulation loop for corrosion studies: Hastelloy N compatibility with NaBF4-NaF (92-8 mole%)", of J.W KOGER, Oak Ridge National Laboratory, ORNL-TM-4221, December 1972, a molten salt forced-circulation loop is described. Standardized test facilities were developed and operated for investigating the compatibility of structural materials with flowing molten fluoride salts. In this document, a sophisticated pumped loop system is designed and operated to study the compatibility of Hastelloy N to flowing NaBF₄-NaF (92-8 mole %) at a maximum temperature of 620°C and a minimum temperature of 454°C. The design of this loop allows to remove or add corrosion test specimens without draining the fluid from the loop. Principal test variables include temperature, velocity, time, and impurities in the fluid. To simulate MSBR (molten salt breeder reactor) coolant circuit conditions, the salt is circulated in a loop piping at a velocity of about 3.05 m/s at bulk fluid temperatures from 454°C to 620 °C. Corrosion test specimens are installed at three locations in the loop circuit for exposure to the salt at three different temperatures (620°C, 537°C and 454°C) and at bulk flow velocities of 3.05 m/s and 6.09 m/s.

Document WO 2008/115050 A1 relates to a laboratory degradation test system for testing degradation of a test specimen in a test fluid flow, the test system comprising a reactor assembly, which reactor assembly comprises:
- a reactor vessel, the reactor vessel having a reaction space, an inlet and an outlet and a specimen holder for retaining a test specimen inside the reactor vessel,
- a heater for heating the reactor vessel,
- a fluid circulation system generating a test fluid flow over the test specimen, which fluid circulation system comprises a circulation line which extends between the outlet of the reactor vessel and the inlet of the reactor vessel, which circulation line is arranged outside the reactor vessel, and a pump for providing fluid circulation through the circulation line and the reactor vessel, which pump is arranged in the circulation line. The laboratory test system is characterised in that the volume available to the test fluid inside the reaction space after insertion of the degradation test specimen is less than or equal to 10 ml.

Document DE 10 2012 221673 A1 discloses a sample holder for a test device intended to test environmental effects on a sample. The sample holder has at least one fluid test section which is connected to the at least one sample area bringing at least one sample into fluid contact and designed to expose the at least one sample at the least one sample area to a fluid.

Molten salt technology has been used for many years in thermal storage, industrial process heat transfer, nuclear reactors, etc. Currently, it is very challenging to improve the accuracy and performances of a molten salt test loop to know its material compatibility. It is important to obtain results which are closer to the real conditions, by performing a test when taking into account material behavior in molten salt.

### Aims of the Invention

The present invention aims to provide a high performance test installation that enables carrying out corrosion dynamic tests on sample parts in contact with a fluid.

In particular, a goal of the invention is allowing to obtain representative corrosion and degradation tests to accurately determine the behaviour of actual solar receivers.

The invention further aims to provide a dynamic corrosion test loop exposing samples to conditions as close as possible to real use conditions, for example in terms of temperature differences, flow rate, flow type, etc.

In particular, the invention aims to obtain a dynamic corrosion test loop presenting high flexibility in terms of thermal gradient between the circulating the molten salt and the test tube specimens, as well as improved accuracy thanks to fast and precise reaching of desired temperature.

### Summary of the Invention

A first aspect of the present invention relates to a dynamic corrosion and degradation testing installation, comprising :
- a tank for heating and storing, in use, a fluid at a given temperature ;
- a looped circuit comprising a pipe containing the fluid during the tests, having a first end and a second end both connected to the tank ;
- a pump for circulating the fluid in the pipe ;
- a plurality of test stands located at different locations along the pipe, each test stand comprising a sample holder or testing chamber holding, in use, at least one solid sample in contact with the fluid and a heater intended to heat said sample holder;
characterized in that each test stand comprises a portion of the pipe made of the solid sample to be tested, preferably a metal sample, having the function of a testing chamber, said solid sample being in tubular form with fluid flowing therein, the heater being under the form of an inductor wrapped around said portion of pipe and intended to provide, in use, a steady energy flow and ensure a gradient of temperature between the fluid and the sample to be tested.

The present invention also concerns a shipping container comprising the aforementioned installation.

According to preferred embodiments of the invention, the installation is further limited by one of the following features or by a suitable combination thereof:
- the portion of the pipe made of the solid sample to be tested is inserted in the looped circuit pipe thanks to welded connections at both ends or to connections using flanges ;
- the welded connections are full penetration butt welds out of chamfered tube ends ;
- the flanges are non-conducting flanges ;
- the installation comprises an electrical resistor provided around or within the tank to heat the fluid ;
- the pipe is tilted from the horizontal, preferably at about 4° from the horizontal;
- the heated sample holders and the corresponding inductors are in the number of one or more ;
- the tank comprises an external insulation and draining means ;
- the installation also comprises a cooling device to avoid the overheating of the fluid ;
- the cooling device comprises a heat exchanger.

Another aspect of the present invention relates to a method for carrying out dynamic corrosion and degradation tests on samples being in contact with a fluid, by means of the aforementioned installation, comprising at least the following steps of :
- putting metal samples on each of the test stands within the pipe ;
- heating the fluid contained in the tank ;
- circulating the fluid in the pipe according to the looped circuit by activating the pump ;
- cooling the pipe in the cooler by circulating therein a cooling fluid ;
- heating the samples in the test stands using the corresponding inductors to provide at each heated test stand a steady heat flow and to create a temperature gradient between the fluid and the sample ;
- after having stopped the heating of the fluid and having drained the fluid out of the installation, opening the test stands, removing the samples therefrom, and performing degradation tests on the samples.

According to preferred embodiments of the invention, the method is further limited by one of the following features or by a suitable combination thereof :
- the samples are heated in the test stands by the corresponding inductors so that the steady heat flow is comprised between 1 and 3 MW/m² and the temperature gradient between the fluid and the respective samples is up to 150°C ;
- the degradation tests are weight loss measurement after descaling and micrographic cross-section examination ;
- the fluid is circulated at a velocity comprised between 2 and 8 m/s and preferably at a velocity of about 4 m/s ;
- the minimal temperature of the sample holders is comprised between 100°C and 290°C and the maximal temperature of the sample holders is comprised between 380°C and 800°C ;
- the heating is operated in order to have, with sample holders at least in number of five, an unheated sample holder and four sample holders respectively heated at 600°C, 625°C, 650°C and 700°C ;
- the fluid is heated in the tank from 100°C to 700°C ;
- the pump is run from 7 to 15 m³/s ;
- the fluid is a molten salt or thermal oil.

### Brief Description of the Drawings

Figures 1A and 1B schematically represent a particular embodiment for an installation intended to carry out dynamic corrosion and degradation tests on samples exposed to a medium in a melted state according to the present invention.
Figure 2 represents a detailed cross-sectional view of the installation of figure 1B.
Figure 3 represents a detailed view of a test-stand of the installation of the present invention, comprising a sample holder and an inductor.
Figure 4 is a cross-sectional view of the test stand of figure 3.
Figure 5 represents a detailed cross-sectional view of the cooling device and the induction power system of the installation according to the invention.
Figure 6 represents a detailed cross-sectional view of the tank of fluid and the pump of the installation of the present invention.
Figure 7 schematically represents chamfered sample tubes sections prepared for butt welding with full penetration.

### Reference Symbols

- 1: Installation for carrying out dynamic corrosion and degradation tests
- 2: Hot pot of fluid
- 3: Pipe (similar to test tube)
- 4: Sample
- 5A: Unheated sample holder
- 5B: Heated sample holder
- 6: Inductor for heating a heated sample holder
- 7: Power system/supply
- 8: Pump for circulating the fluid
- 9: Heat exchanger (cooling device)
- 10: DCS (digital control system)
- 11: Air supply
- 12: Drain tank
- 13: Fluid
- 14: Heating unit
- 15: Pressure sensor
- 16: Flow sensor
- 17: Temperature sensor
- 18: Pyrometer
- 19: Air blower
- 21: Tank insulation
- 22: Chamfer

### Description of Preferred Embodiments of the Invention

The present invention relates to an installation 1 to carry out dynamic corrosion and/or degradation tests on samples, preferably metal samples 4 being in contact with a fluid circulating in a pipe 3.

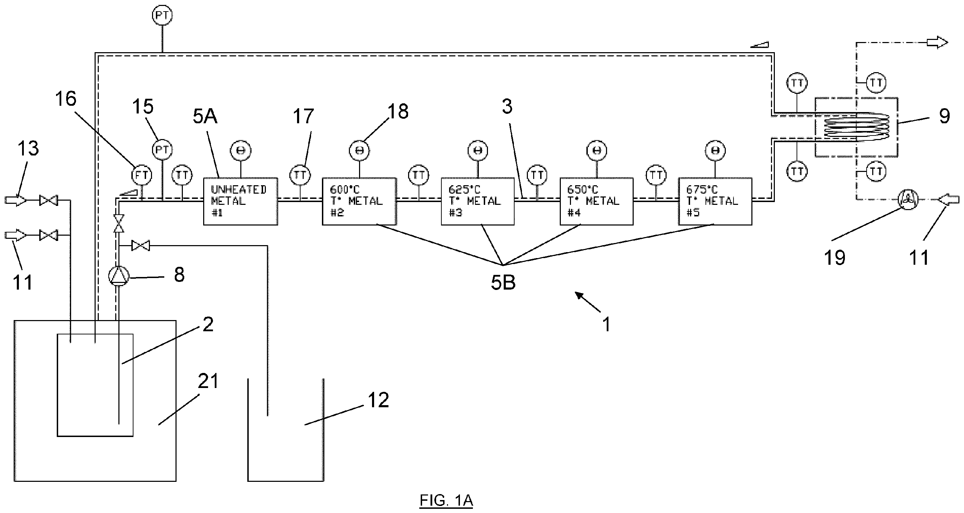

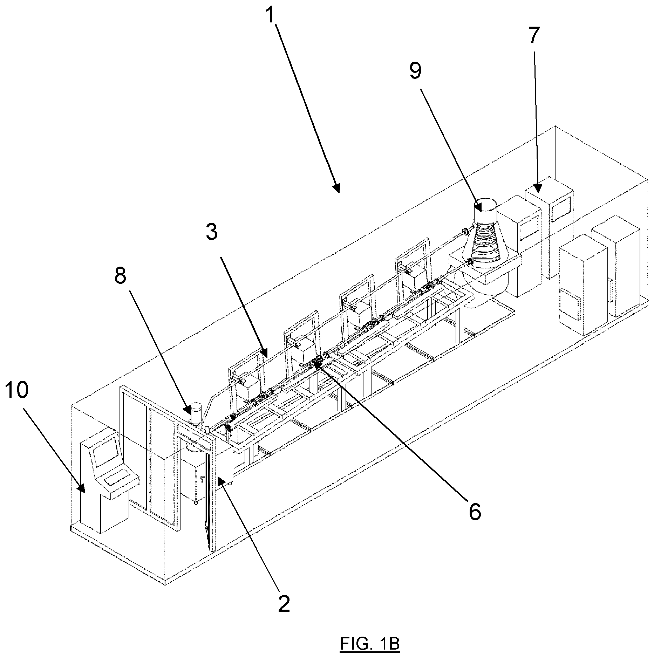

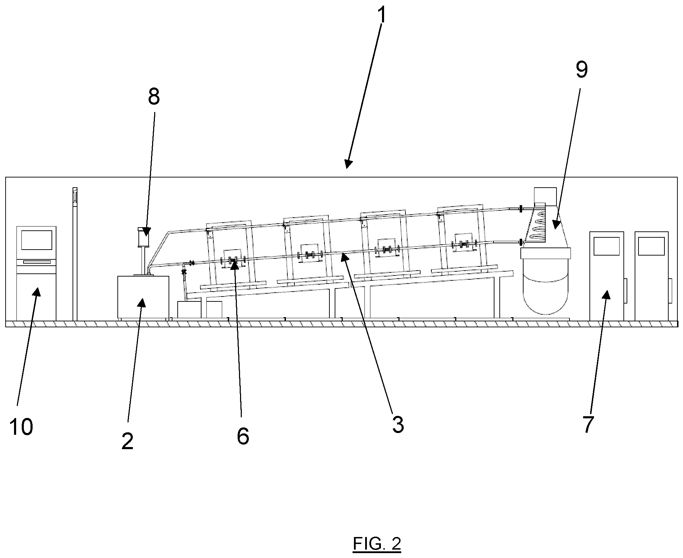

To this end, and as illustrated by Figures 1A, 1B and 2, the installation 1 of the invention comprises a hot tank or pot 2 for heating up to desired temperature and storing a fluid and a circulation loop comprising a pipe 3 in which the fluid circulates thanks to a pump 8. Preferably, the pipe 3 is tilted from the horizontal plane to facilitate drainage and avoid problems of solidification of salt and, more preferably, the pipe 3 is tilted of about 4° from the horizontal plane.

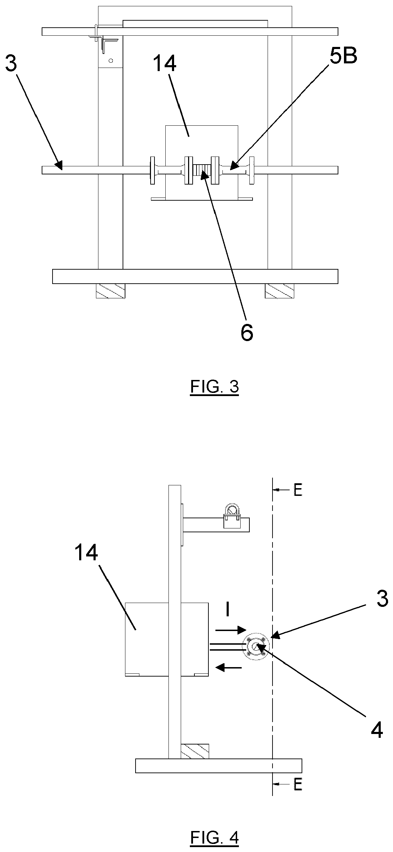

According to the invention, the installation comprises several test points that will be called hereinafter "test stands", located at different locations along the pipe 3. As illustrated by Figures 3 and 4, each test-stand comprises a sample holder or testing chamber 5B to hold, in use, a sample 4 in a specific portion of said pipe 3, and a heating unit 14 comprising an inductor or coil 6 wrapped around the pipe 3 for heating the sample holder 5B and the sample 4. In this way, each sample holder 5B is heated by a specific inductor 6 in order to obtain a different, independently controlled temperature in all the portions of pipe 3, each containing a sample 4. In the installation of the present invention, these specific portions of pipe 3 have the functionality of a test chamber in addition of that of containing the fluid. A power system/supply 7 for each heating unit 14 and inductor 6 is provided near or within the installation 1.

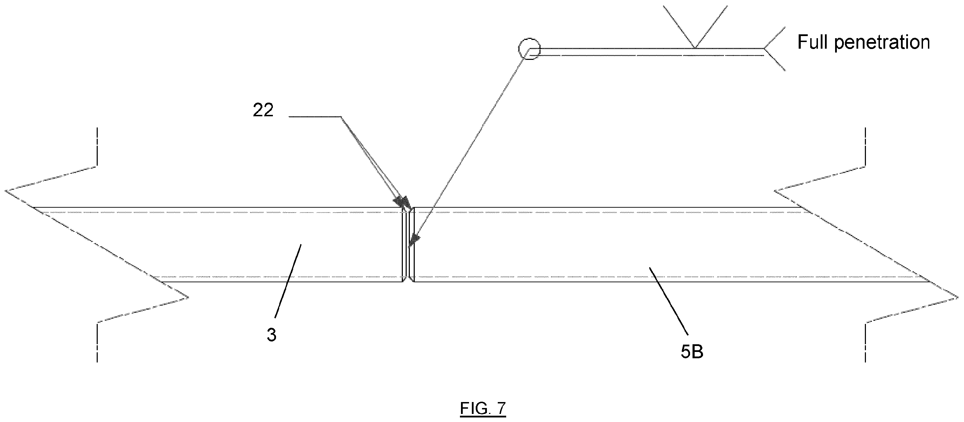

According to a preferred embodiment, the metal samples 4 are made of tubular portions of the metal to be tested that are inserted with butt welding connections in the pipe 3. Still preferably the welding connections are full penetration butt welds out of chamfered tube ends. For example, in the test pipe area, sections of specific stainless steel to be tested (e.g. SB 626 NO6230) may alternate with sections made of ordinary stainless steel (such as AISI 304 for example). Figure 7 schematically shows the chamfered tubes sections prepared for butt welding with full penetration.

According to another embodiment, the sections to be tested can be connected with other pipe sections using flanges, preferably non-conducting flanges. This solution has the advantage that the heat created locally does not propagate toward the whole pipe and further to the fluid. Alternately, the sample holder can comprise a series of pipe sections to be tested separated by non-conducting flanges. This solution could however suffer from sealing problems at high temperature.

The fluid, for example a molten medium, circulating in the pipe 3 of the loop has a temperature that is essentially constant, and is heated by heating means such as an electrical resistor (not shown) provided around or within heating tank 2. Typically 50-100L molten salt circulate in the installation.

In this way, the installation of the present invention allows to provide a gradient of temperature between the circulating fluid and each sample holder, in order to simulate real conditions. This coupling between inductor 6 and sample holder 5B allows a high flexibility in terms of thermal gradient between the molten salt and the test tube samples 4, as well as improved accuracy thanks to fast and precise reaching of desired temperature specifically obtained by induction heating. As a result, this test configuration allows a better understanding of the behaviour of a fluid that is in contact with a metal of higher temperature.

A temperature difference up to 150°C between the fluid (molten salt) circulating in the pipe 3 and metal samples 4 can be obtained using an external induction heating. The critical element of the installation is to maintain this temperature difference between metal sample and fluid. Circulating fluid will permanently absorb a certain energy quantity from the hotter metal, with the consequence that the metal temperature will decrease, unless the latter is subject to a steady energy flow. This energy flow should be of the same order of magnitude as in real conditions, e.g. from 1 to 3 MW/m² in the solar energy domain.

For example, in the CSP molten salt solar tower technology, the heat transfer fluid is a molten salt typically entering at 290°C in the solar receiver and coming out thereof at about 565°C. The surface temperature of the solar receiver panels is comprised between 500°C and more than 600°C or even 700°C, according to their position relative to the sun direction. Obviously, the elements of the solar receiver brought into contact with the molten salt are at different temperatures depending on their location. It is therefore important to consider these temperature differences during corrosion tests. To simulate molten salt solar circuit conditions, samples 4 are installed at different locations in the loop circuit, in test stands, in which the pipe 3 acts as a test tube and is at a different temperature from the other test stands. The dynamic test loop of the present invention allows to modulate different temperature gradients between the molten medium and the test tubes (stands) so that to be close to real conditions.

According to a preferred embodiment of the present invention, the minimal temperature of the sample holder 5 will be in the range between 100 and 290°C and the maximal temperature will be in the range between 380 and 800°C, according to the specific fluid used (water, thermal oil or molten salt). These temperatures are obtained very quickly thanks to each inductor 6 heating each portion of the pipe 3 comprising a sample-holder 5.

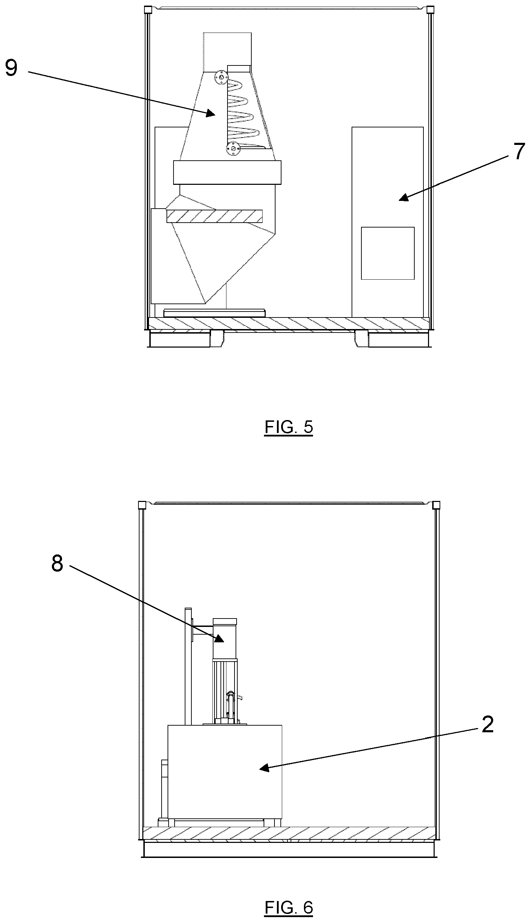

A pump 8 is provided in order to circulate the fluid in the pipe 3, as illustrated by figures 1A, 1B and 6. In case the tests are performed to simulate the molten salt in a CSP solar tower, the molten salt circulates at a velocity comprised between 3 and 6 m/s, preferably of 4m/s. As the test tubes are in fact heated portions of the pipe 3, the flow circulates in the same manner than in the tubes of a solar tower. The results of the tests on the samples 4 are more precise and correspond more to the reality than in tests made in a separate chamber containing a bath.

The fluid used in the invention can be a molten salt such as a binary or ternary alkali nitrate molten salt (e.g. KNO3/NaNO3 ; KNO3/NaNO2/NaNO3), or a carbonate salt, or thermal oil.

In a preferred embodiment of the present invention, the installation comprises an unheated test stand with an unheated sample holder 5A and four heated test stands, where the four heated sample holders 5B are heated respectively for example at 600°C, 625°C, 650°C and 675°C. These temperatures suitably simulate the level of temperature of the solar receiver panel surface according to its respective positions relative to the sun.

The tank 2 comprises an external insulation 21 at its external surface to keep the molten salt at the desired temperature (Fig. 1A). The installation 1 can also comprise a cooling device 9 to avoid the overheating of the molten medium (see Figures 1A, 1B, 2 and 5). The cooling device 9 can comprise a heat exchanger (e.g. air or water heat exchanger). In case the fluid is molten salt, this cooling device allows for example to keep the salt at about 565°C, as in a CSP molten salt tower plant.

Advantageously, the present installation 1 can be provided in the form of a shipping container. In this way, the installation is easily transportable and can be located close to the installation to be analyzed, such as at the base of a solar tower for example.

In use, samples 4 are place on different sample holders 5. Each sample holder 5 is quickly, separately and independently heated at the desired temperature, by its assigned inductor 6, while the fluid located in the tank 2 is heated by an electric resistor. Once the fluid has reached the desired temperature in tank 2, pump 8 circulates the fluid in the different test stands located on the pipe 3. The samples 4, which are hold at an accurate temperature, are then in contact with the fluid which is at another temperature. The turbulent flow of the fluid circulating in the pipe 3, in contact with the samples 4, allows to obtain test conditions as close as possible to the real conditions.

After having been in contact with the fluid and removed from the pipe 3, the samples 4 are analyzed, for example by mass loss analysis, to determine the degradation and corrosion rate of the samples in contact with the fluid. Advantageously the present installation 1 permits to cycle the tests.

## Claims

1. A dynamic corrosion and degradation testing installation (1) comprising :
- a tank (2) for heating and storing, in use, a fluid at a given temperature;
- a looped circuit comprising a pipe (3) containing the fluid during the tests, having a first end and a second end both connected to the tank (2);
- a pump (8) for circulating the fluid in the pipe (3);
- a plurality of test stands located at different locations along the pipe (3), each test stand comprising a sample holder or testing chamber (5B) holding, in use, a solid sample (4) in contact with the fluid and a heater (6), intended to heat said sample holder (5B); **characterized in that** each test stand comprises said sample holder (5B) to hold, in use, said solid sample (4) in a specific portion of said pipe (3), these specific portions of the pipe (3) havinge the functionality of a test chamber in addition to that of containing the fluid, a heating unit (14) comprising an inductor coil (6) wrapped around said portion of the pipe (3) and adapted to provide a steady energy flow and to ensure a gradient of temperature between the fluid and the solid sample (4) to be tested.

2. The installation according to claim 1, **characterized in that** the portion of the pipe (3) made of the solid sample (4) to be tested is inserted in the looped circuit pipe (3) by welded connections at both ends or to connections using flanges.

3. The installation according to claim 2, **characterized in that** the welded connections are full penetration butt welds out of chamfered tube ends.

4. The installation according to claim 1, **characterized in that** the flanges are non-conducting flanges.

5. The installation according to claim 1, **characterized in that** it comprises an electrical resistor provided around or within the tank (2) to heat the fluid therein.

6. The installation according to claim 1, **characterized in that** the pipe (3) is tilted from the horizontal, preferably at about 4° from the horizontal.

7. The installation according to claim 1 **characterized in that** the tank (2) comprises external insulation (21) and draining means (12)

8. The installation according to claim 1, **characterized in that** it also comprises a cooling device (9) to avoid overheating of the fluid

9. The installation according to claim 8, **characterized in that** the cooling device (9) comprises a heat exchanger.

10. A shipping container comprising the installation according to anyone of claims 1 to 9.

11. A method for carrying out dynamic corrosion and degradation tests on samples (4) being in contact with a fluid, by means of the installation according to any_one of claims 8 to 9, comprising at least the following steps of :
- placing metal samples (4) on each of the test stands within the pipe (3) ;
- heating the fluid contained in the tank (2) ;
- circulating the fluid in the pipe (3) according to the looped circuit by activating the pump (8) ;
- cooling the pipe (3) by means of cooling device (9) ;
- heating the samples (4) in the test stands using the corresponding inductor (6) to provide at each heated test stand a steady heat flow and to create a temperature gradient between the fluid and the sample (4) ;
- stopping the heating of the fluid and draining the fluid out of the installation, subsequently opening the test stands, removing the samples therefrom, and performing degradation tests on said solid samples (4).

12. The method according to claim 11, **characterized in that** the samples (4) are heated in the test stands by the respective inductors (6), so that the steady heat flow is comprised between 1 and 3 MW/m² and the temperature gradient between the fluid and the sample is up to 150°C.

13. The method according to claim 11, **characterized in that** the degradation tests are weight loss measurements after descaling and micrographic cross-section examination.

14. The method according to claim 11, **characterized in that** the fluid is a molten salt or thermal oil.

## Patentansprüche

1. Dynamische Korrosions- und Zersetzungsprüfanlage (1), umfassend:
- einen Behälter (2) zum Erhitzen und Speichern, im Gebrauch, eines Fluids bei einer gegebenen Temperatur;
- einen Kreislauf, umfassend eine Rohrleitung (3), die während der Tests das Fluid enthält und ein erstes und ein zweites Ende aufweist, die beide mit dem Behälter (2) verbunden sind;
- eine Pumpe (8) zum Umwälzen des Fluids in der Rohrleitung (3);
- eine Vielzahl von Prüfständen, die sich an verschiedenen Stellen entlang der Rohrleitung (3) befinden, jeder Prüfstand umfassend einen Probenhalter oder eine Prüfkammer (5B), der/die im Gebrauch eine Feststoffprobe (4) in Kontakt mit dem Fluid hält, und eine Heizung (6), die dazu bestimmt ist, den Probenhalter (5B) zu erhitzen; **dadurch gekennzeichnet, dass** jeder Prüfstand den Probenhalter (5B) umfasst, um im Gebrauch die Feststoffprobe (4) in einem bestimmten Abschnitt der Rohrleitung (3) zu halten, wobei diese bestimmten Abschnitte der Rohrleitung (3) zusätzlich zu der Funktion, das Fluid zu enthalten, auch die Funktion einer Prüfkammer aufweisen, eine Heizeinheit (14), umfassend eine Induktionsspule (6), die um den Abschnitt der Rohrleitung (3) gewickelt ist und angepasst ist, um im Gebrauch einen stetigen Energiefluss bereitzustellen und einen Temperaturgradienten zwischen dem Fluid und der zu prüfenden Feststoffprobe (4) zu gewährleisten.

2. Anlage nach Anspruch 1, **dadurch gekennzeichnet, dass** der Abschnitt der Rohrleitung (3), der aus der zu prüfenden Feststoffprobe (4) gefertigt ist, durch Schweißverbindungen an beiden Enden oder durch Verbindungen unter Verwendung von Flanschen in die Kreislaufrohrleitung (3) eingeführt wird.

3. Anlage nach Anspruch 2, **dadurch gekennzeichnet, dass** die Schweißverbindungen durchgeschweißte Stumpfschweißnähte aus abgeschrägten Rohrenden sind.

4. Anlage nach Anspruch 1, **dadurch gekennzeichnet, dass** die Flansche nichtleitende Flansche sind.

5. Anlage nach Anspruch 1, **dadurch gekennzeichnet, dass** sie einen elektrischen Widerstand umfasst, der um den Behälter (2) herum oder darin bereitgestellt ist, um das Fluid darin zu erhitzen.

6. Anlage nach Anspruch 1, **dadurch gekennzeichnet, dass** die Rohrleitung (3) gegenüber der Horizontalen geneigt ist, vorzugsweise um etwa 4° gegenüber der Horizontalen.

7. Anlage nach Anspruch 1, **dadurch gekennzeichnet, dass** der Behälter eine äußere Isolierung (21) und Ablasseinrichtungen (12) umfasst.

8. Anlage nach Anspruch 1, **dadurch gekennzeichnet, dass** sie auch eine Kühlvorrichtung (9) umfasst, um ein Überhitzen des Fluids zu vermeiden.

9. Anlage nach Anspruch 8, **dadurch gekennzeichnet, dass** die Kühlvorrichtung (9) einen Wärmetauscher umfasst.

10. Schiffscontainer, umfassend die Anlage nach einem der Ansprüche 1 bis 9.

11. Verfahren zum Durchführen von dynamischen Korrosions- und Zersetzungsprüfungen an Proben (4), die mit einem Fluid in Kontakt sind, mittels der Anlage nach einem der Ansprüche 8 bis 9, umfassend zumindest die folgenden Schritte:
- Platzieren von Metallproben (4) auf jedem der Prüfstände innerhalb der Rohrleitung (3);
- Erhitzen des Fluids, das in dem Behälter (2) enthalten ist;
- Umwälzen des Fluids in der Rohrleitung (3) gemäß dem Kreislauf durch Betätigen der Pumpe (8);
- Kühlen der Rohrleitung (3) mittels Kühlvorrichtung (9);
- Erhitzen der Proben (4) in den Prüfständen unter Verwendung des entsprechenden Induktors (6), um an jedem beheizten Prüfstand einen gleichmäßigen Wärmestrom zu erzeugen und einen Temperaturgradienten zwischen dem Fluid und der Probe (4) zu schaffen;
- Unterbrechen des Erhitzens des Fluids und Ablassen des Fluids aus der Anlage, danach Öffnen der Prüfstände, Entnehmen der Proben daraus und Durchführen von Zersetzungsprüfungen an den Feststoffproben (4).

12. Verfahren nach Anspruch 11, **dadurch gekennzeichnet, dass** die Proben (4) in den Prüfständen durch die jeweiligen Induktoren (6) erhitzt werden, sodass der stetige Wärmestrom zwischen 1 und 3 MW/m² ist und der Temperaturgradient zwischen dem Fluid und der Probe bis zu 150 °C ist.

13. Verfahren nach Anspruch 11, **dadurch gekennzeichnet, dass** die Zersetzungsprüfungen Gewichtsverlustmessungen nach Entzundern und mikrografische Querschnittsuntersuchung sind.

14. Verfahren nach Anspruch 11, **dadurch gekennzeichnet, dass** das Fluid ein geschmolzenes Salz oder Thermoöl ist.

## Revendications

1. Installation de tests dynamiques de corrosion et de dégradation (1) comprenant :
- un réservoir (2) destiné à chauffer et stocker, pendant l'utilisation, un fluide à une température donnée ;
- un circuit en boucle comprenant un conduit (3) contenant le liquide pendant les tests, ayant une première extrémité et une deuxième extrémité toutes les deux reliées au réservoir (2) ;
- une pompe (8) destinée à faire circuler le liquide dans le conduit (3) ;
- une pluralité de supports de test situés à différents emplacements le long du conduit (3), chaque support de test comprenant un porte-échantillon ou une chambre de tests (5B) qui contient, pendant l'utilisation, un échantillon solide (4) en contact avec le liquide et un réchauffeur (6), destiné à chauffer ledit porte-échantillon (5B) ; **caractérisée en ce que** chaque support de test comprend ledit porte-échantillon (5B) destiné à contenir, pendant l'utilisation, ledit échantillon solide (4) dans une partie spécifique du conduit (3), ces parties spécifiques du conduit (3) ayant la fonctionnalité d'une chambre de tests en plus de celle de contenir le liquide, une unité de chauffage (14) comprenant une bobine d'induction (6) enroulée autour de ladite partie du conduit (3) et adaptée pour fournir un flux d'énergie stable et pour garantir un gradient de température entre le liquide et l'échantillon solide (4) à tester.

2. Installation selon la revendication 1, **caractérisée en ce que** la partie du conduit (3) composée de l'échantillon solide (4) à tester est insérée dans le conduit du circuit en boucle (3) par des raccords soudés aux deux extrémités ou à l'aide de raccords qui utilisent des brides.

3. Installation selon la revendication 2, **caractérisée en ce que** les raccords soudés sont des soudures bout à bout à pénétration complète et à extrémités de tube chanfreinées.

4. Installation selon la revendication 1, **caractérisée en ce que** les brides sont des brides non conductrices.

5. Installation selon la revendication 1, **caractérisée en ce qu'**elle comprend une résistance électrique prévue autour de ou dans le réservoir (2) afin de chauffer le liquide contenu à l'intérieur.

6. Installation selon la revendication 1, **caractérisée en ce que** le conduit (3) est incliné par rapport à l'horizontale, de préférence à environ 4° par rapport à l'horizontale.

7. Installation selon la revendication 1, **caractérisée en ce que** le réservoir (2) comprend une isolation externe (21) et un moyen de vidange (12).

8. Installation selon la revendication 1, **caractérisée en ce qu'**elle comprend en outre un dispositif de refroidissement (9) destiné à empêcher toute surchauffe du liquide.

9. Installation selon la revendication 8, **caractérisée en ce que** le dispositif de refroidissement (9) comprend un échangeur thermique.

10. Conteneur d'expédition comprenant l'installation selon l'une quelconque des revendications 1 à 9.

11. Procédé de réalisation de tests dynamiques de corrosion et de dégradation sur des échantillons (4) en contact avec un liquide, à l'aide de l'installation selon l'une quelconque des revendications 8 à 9, comprenant au moins les étapes suivantes consistant à :
- placer des échantillons de métal (4) sur chacun des supports de test dans le conduit (3) ;
- chauffer le liquide contenu dans le réservoir (2) ;
- faire circuler le liquide dans le conduit (3) selon le circuit en boucle en activant la pompe (8) ;
- refroidir le conduit (3) à l'aide du dispositif de refroidissement (9) ;
- chauffer les échantillons (4) dans les supports de test à l'aide de l'inducteur correspondant (6) afin de prévoir, au niveau de chaque support de test chauffé, un flux de chaleur stable et de créer un gradient de température entre le liquide et l'échantillon (4) ;
- arrêter le chauffage du liquide et évacuer le liquide de l'installation, puis ouvrir les supports de test, retirer les échantillons de ceux-ci, et réaliser des tests de dégradation sur lesdits échantillons solides (4).

12. Procédé selon la revendication 11, **caractérisé en ce que** les échantillons (4) sont chauffés dans les supports de test par les inducteurs respectifs (6), de sorte que le flux de chaleur stable soit compris entre 1 et 3 MW/m² et que le gradient de température entre le liquide et l'échantillon soit tout au plus de 150°C.

13. Procédé selon la revendication 11, **caractérisé en ce que** les tests de dégradation sont des mesures de perte de poids après détartrage et examen micrographique de la section transversale.

14. Procédé selon la revendication 11, **caractérisé en ce que** le liquide est un sel fondu ou du pétrole produit par méthode thermique.
